# FASCICULE DE BREVET EUROPEEN

(11) **EP 0 755 487 B1**
(45) Date de publication et mention de la délivrance du brevet: **02.12.1998**
(21) Numéro de dépôt: 96903054.3
(22) Date de dépôt: 06.02.1996
(51) Int. Cl.: F16D 25/08

(54) **BUTEE DE DEBRAYAGE A COMMANDE HYDRAULIQUE POUR EMBRAYAGE A DIAPHRAGME, NOTAMMENT POUR VEHICULE AUTOMOBILE COMPORTANT UN MANCHON DE GUIDAGE**
HYDRAULISCH BETÄTIGTES AUSRÜCKLAGER FÜR KRAFTFAHRZEUGKUPPLUNG MIT MEMBRANFEDER
HYDRAULICALLY CONTROLLED RELEASE BEARING FOR A DIAPHRAGM CLUTCH, PARTICULARLY FOR A MOTOR VEHICLE, COMPRISING A GUIDE SLEEVE

(30) Priorité: 09.02.1995 FR 9501700
(43) Date de publication de la demande: 29.01.1997
(73) Titulaire: VALEO, 75017 Paris (FR)
(72) Inventeur: GIROIRE, Jean-Pierre, F-78100 Saint-Germain-en-Laye (FR)
(74) Mandataire: Gamonal, Didier
(86) Numéro de dépôt international: FR9600191
(87) Numéro de publication internationale: WO9624781

(56) Documents cités:
- WO-A-88/09889
- DE-A- 3 504 086
- DE-A- 4 412 734
- FR-A- 2 692 950
- GB-A- 2 273 541
- US-A- 5 083 649

## Description

La présente invention concerne les butées de débrayage, à commande hydraulique, pour embrayage à diaphragme, notamment pour véhicule automobile, comportant une partie fixe comprenant un tube de support interne et un corps extérieur concentriques définissant une cavité annulaire borgne d'orientation axiale propre à être alimentée en fluide et à l'intérieur de laquelle est monté mobile axialement un piston de forme tubulaire.

Une telle butée est décrite par exemple dans le document FR-A-2 692 950 conforme au préambule de la revendication 1. Dans ce document le tube intérieur fait saillie axialement par rapport au corps extérieur.

Le piston porte à son extrémité avant un élément d'attaque propre à agir sur le diaphragme de l'embrayage.

Cette butée peut être alimentée par un fluide du type gazeux ou liquide et c'est la raison pour laquelle elle est dénommée usuellement butée de débrayage à commande hydraulique.

Dans ce type de butée, il se pose un problème car des impuretés peuvent pénétrer dans la cavité définissant avec le piston une chambre de commande à volume variable. De plus rien ne limite la course axiale du piston.

La présente invention a pour objet de pallier cet inconvénient de manière simple et économique.

Suivant l'invention ce problème est résolu par la partie caractérisante de la revendication 1.

Ainsi grâce à l'invention il est créé une chicane évitant la pénétration des souillures dans la chambre de commande et ce de manière simple et économique.

En outre le piston reste à l'intérieur de la cavité borgne avant association de la butée avec l'embrayage.

Avantageusement ce manchon est en matériau à bas coefficient de frottement et est rapporté à fixation axiale sur le tube par exemple par sertissage encliquetage ou collage.

Dans une forme de réalisation ce manchon présente au moins un cran propre à pénétrer de manière complémentaire dans une échancrure du tube pour sa fixation audit tube.

Avantageusement on prévoit au moins deux crans et deux échancrures.

La partie fixe de la butée de débrayage peut être monobloc mais avantageusement, pour faciliter le montage du piston à l'intérieur de la cavité borgne et l'enfilage du piston sur le manchon de guidage, le tube interne est distinct du corps extérieur. Ce tube interne est métallique et présente dans une forme de réalisation à son extrémité arrière un flasque annulaire d'orientation transversale permettant de centrer le corps extérieur.

Ce flasque présente à cet effet un bourrelet annulaire d'orientation axiale pour centrage du tube guide par rapport à une partie fixe à savoir le carter de la boîte de vitesses dans le cas d'une application pour véhicule automobile.

Grâce à cette réalisation, on peut avoir un tube intérieur moins épais que dans le cas où la partie fixe est monobloc et ce avec un tube intérieur obtenu de manière économique.

Selon une caractéristique l'extrémité arrière du piston porte un joint par l'intermédiaire d'une pièce d'assemblage ancrée dans ledit joint et montée par encliquetage sur l'extrémité arrière du piston.

Le joint permet de rendre étanche la chambre de commande et ne peut sortir de la cavité borgne grâce à l'épaulement du piston coopérant de manière précitée avec l'extrémité arrière du manchon de guidage.

Le joint présente des lèvres ainsi que centralement un pion propre à venir en butée contre le fond de la cavité lorsque l'embrayage est en position engagée.

Ainsi on diminue les bruits, et le corps extérieur sert de guidage au joint en sorte qu'il n'a pas besoin d'être usiné intérieurement de manière précise, le guidage du piston étant réalisé par le manchon de guidage et par le tube intérieur coopérant avec l'extrémité arrière du piston.

Avantageusement le piston présente à son extrémité avant un nez et un flasque annulaire d'orientation transversale permettant le montage d'un roulement à billes propre à venir en contact avec l'extrémité interne des doigts du diaphragme de l'embrayage. Le manchon de guidage permet un bon soutien dudit nez.

Ce nez du piston, dans une forme de réalisation, présente une gorge pour montage d'une rondelle élastique à action axiale permettant de serrer un rebord radial que présente la bague interne du roulement, au contact du flasque du piston.

On obtient ainsi une butée de débrayage du type autocentreuse.

Grâce à toutes ces dispositions il est aisé d'intercaler entre le corps extérieur et le flasque du piston un ressort de précharge sollicitant en permanence le roulement au contact des extrémités des doigts du diaphragme. Grâce à ce ressort de précharge il est possible, avant montage de la butée de débrayage au sein de l'embrayage, de créer un ensemble unitaire, le flasque du tube-guide venant au contact du corps externe, tandis que le piston vient buter contre l'extrémité arrière du manchon de guidage de manière précitée.

En prolongeant radialement vers l'extérieur la bague interne du roulement, il est possible de monter un soufflet de protection entourant le ressort de précharge ainsi que le piston. Ainsi la chambre de commande est protégée par le soufflet et par le manchon de guidage.

Suivant une caractéristique pour réduction de l'encombrement axial le ressort de précharge, le piston et une portion tubulaire du corps sont logés en dessous de la bague interne du roulement.

La description qui va suivre illustre l'invention en regard des dessins annexés dans lesquels :
- la figure 1 est une vue en coupe axiale d'un embrayage pour véhicule automobile équipé de la butée de débrayage selon l'invention ;
- la figure 2 est une vue de face du corps extérieur de la butée de débrayage de la figure 1 ;
- la figure 3 est une vue partielle à plus grande échelle de la partie centrale de la figure 1 ;
- la figure 4 est une vue partielle des moyens d'assemblage entre le tube intérieur et le manchon de guidage ;
- la figure 5 est une vue partielle en coupe axiale montrant les moyens d'assemblage entre le tube intérieur et le manchon de guidage pour un autre exemple de réalisation.

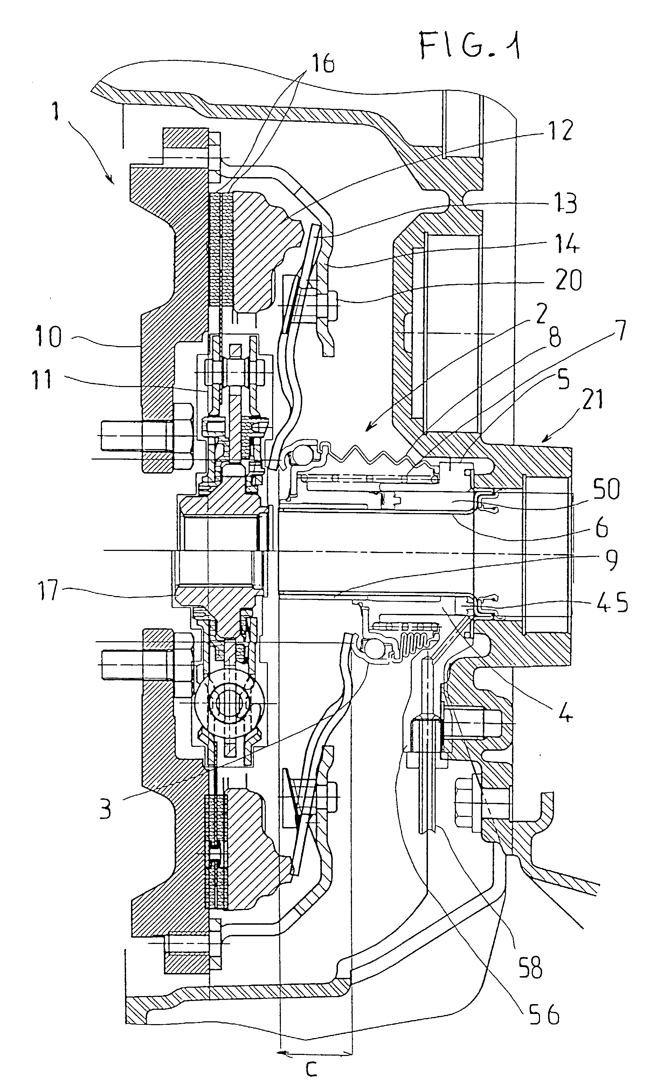

A la figure 1 on voit en 1 un embrayage comportant, successivement axialement, un plateau de réaction 10, un disque de friction 11, un plateau de pression 12, un diaphragme 13, un couvercle 14 en forme d'assiette creuse.

Le plateau de réaction 10 est destiné à être fixé, ici par des vis, sur un arbre menant non visible, ici le vilebrequin du moteur du véhicule automobile, et offre une face de friction aux garnitures de friction 16, que présente le disque de friction 11 à sa périphérie externe.

Ce disque de friction 11 présente à sa périphérie interne un moyeu cannelé 17 par l'intermédiaire duquel il est calé en rotation sur l'arbre d'entrée 18 de la boîte de vitesses 21, ledit arbre 18 étant représenté partiellement en pointillés à la figure 3.

Le plateau de pression 12 offre une face de friction au disque de friction 11 et est lié en rotation au couvercle 14 en étant monté mobile axialement par rapport à celui-ci, de manière connue en soi, par l'intermédiaire de languettes tangentielles (non visibles).

Le couvercle creux 14 entoure ici les garnitures 16, le plateau de pression 12 et le diaphragme 13. Il est fixé, par son rebord radial, à sa périphérie externe sur le plateau de réaction 10, ici par des vis non représentées.

Le diaphragme 13 présente, de manière connue en soi, une partie périphérique externe en forme de rondelle Belleville et une partie centrale fragmentée en doigts radiaux par des fentes débouchant intérieurement dans l'ouverture centrale du diaphragme et extérieurement dans des orifices élargis implantés à la périphérie interne de la rondelle Belleville du diaphragme.

Ces orifices sont traversés par des colonnettes 20 fixées sur le fond du couvercle 14 troué centralement. Les colonnettes 20 offrent un appui secondaire à la périphérie interne de la rondelle Belleville du diaphragme 13, en regard d'un appui primaire formé par emboutissage dans le fond du couvercle 14.

A la périphérie externe de sa rondelle Belleville, le diaphragme 13, de forme tronconique à l'état libre, prend appui sur un bossage annulaire fragmenté (non référencé) du plateau de pression 12.

Ainsi grâce aux colonnettes 20 le diaphragme 13 est monté de manière pivotante sur le couvercle 14 entre ses appuis primaire et secondaire et l'embrayage est normalement engagé, le diaphragme 13 prenant appui sur l'appui primaire du couvercle 14 pour solliciter le plateau de pression 12 en direction du plateau de réaction 10 afin de serrer les garnitures de friction 16 du disque 11 entre les plateaux de pression 12 et de réaction 10.

Le couple est ainsi transmis du vilebrequin à l'arbre d'entrée de la boîte de vitesses 21 via les garnitures 16 accouplées ici de manière élastique au moyeu 17.

Pour désengager l'embrayage, de manière connue en soi, il faut agir ici en poussant à l'aide de la butée de débrayage 2 sur l'extrémité interne des doigts du diaphragme 13 pour faire pivoter celui-ci et annuler la charge qu'exerce le diaphragme 13 sur le plateau de pression 12, les languettes élastiques rappelant alors le plateau de pression 12 en direction du fond du couvercle 14 afin de libérer les garnitures de friction 16 du disque 11.

Ici la butée de débrayage 2 comporte un élément d'attaque 3 propre à agir sur l'extrémité interne des doigts du diaphragme 13, une partie mobile à savoir un piston 4 mobile axialement agissant sur l'élément d'attaque 3 pour manoeuvrer celui-ci, une partie fixe 5,6, ici en deux pièces 5,6, définissant avec le piston 4 une chambre de commande 50, des moyens élastiques de précharge 7 interposés entre la partie fixe 5,6 et le piston 4 pour solliciter en permanence l'élément d'attaque 3 au contact des doigts du diaphragme 13 afin d'exercer une précharge de faible valeur sur le diaphragme 13, un soufflet de protection 8 et un manchon de guidage 9 pour guider le piston 4 lors de son mouvement axial.

La chambre de commande 50 est étanche, de manière décrite ci-après, pour introduction dans celle-ci d'un fluide de commande, tel que de l'air ou de l'huile, permettant de pressuriser ou de dépressuriser celle-ci afin de déplacer axialement le piston 4 et l'élément d'attaque 3. La chambre 50 est donc à volume variable, son volume variant en fonction du déplacement axial du piston 4.

Par simplicité la butée 2 sera dénommée butée de débrayage à commande hydraulique, le fluide de commande pouvant être de nature gazeuse ou liquide.

Ici l'élément d'attaque 3 consiste en un roulement à billes doté d'une bague externe 33 tournante et profilée pour venir localement au contact de l'extrémité interne des doigts du diaphragme 13. Dans l'exemple de réalisation lesdits doigts sont plans en sorte que la bague externe du roulement 13, a en section, un profil bombé.

Bien entendu l'inverse est possible, les doigts du diaphragme 13 ayant une extrémité interne bombée, tandis que la bague externe 33 du roulement 3 a alors une forme plane. Tout cela dépend des applications sachant qu'un contact ponctuel est recherché.

La bague interne 34 fixe du roulement 3, ici en tôle, présente un rebord annulaire transversal 31, dit rebord interne du roulement 3, dirigé radialement vers l'axe de la butée 2 pour son attelage au piston 4.

Le piston 4 a une forme tubulaire et présente transversalement à son extrémité avant un flasque annulaire transversale 41 dirigé radialement en direction opposée à l'axe de l'ensemble. Le piston 4 est en matière moulable, par exemple à base d'aluminium ou en matière plastique.

Ici le piston 4 est en matière plastique présentant un faible coefficient de frottement pour faciliter son déplacement.

C'est sur la face avant du flasque 41, adjacente au roulement 3, que s'appuie le rebord 31 du roulement 3. Le rebord 31 est soumis à l'action d'une rondelle élastique à action axiale 32, dite rondelle d'autocentrage, qui s'appuie à sa périphérie externe, sur ledit rebord. Ici la rondelle d'autocentrage 32 est une rondelle de forme tronconique dont la périphérie interne est fragmentée en pattes inclinées, qui prennent appui contre le flanc, le plus éloigné du flasque 41, d'une gorge 42 pratiquée dans le piston 4, entre l'extrémité libre de celui-ci et le flasque 41.

La rondelle 32 a ainsi en section une forme de dièdre et permet de serrer le rebord 31 au contact du flasque 41. Ici la hauteur du rebord 31 est supérieure au diamètre des billes du roulement 3.

Ainsi l'élément d'attaque 3 est attelé axialement au piston tout en ayant la possibilité de se déplacer radialement par rapport à celui-ci.

Il est donc créé, de manière connue en soi, une butée de débrayage 2 autocentreuse permettant au roulement 3 de cheminer radialement pour s'autocentrer par rapport au diaphragme 13, la charge de serrage exercée par la rondelle 32 dépendant des applications en étant tarée pour que le roulement ne tombe pas sous l'effet de son propre poids.

La chambre de commande 50 est délimitée par deux pièces 5,6 fixes en relation de cylindre piston avec le piston 4 mobile axialement, à savoir un tube intérieur 6 et un corps extérieur 5 concentriques.

Les pièces 5,6 appartiennent donc à la partie fixe 5,6 précitée et délimitent une cavité borgne, d'orientation axiale, à l'intérieur de laquelle est monté coulissant le piston 4 faisant saillie axialement par rapport à ladite cavité en rentrant plus ou moins dans celle-ci. Cette cavité est de forme annulaire et est alimentée en fluide.

L'une des pièces 5,6 consiste donc en un tube intérieur de guidage et de support 6 entourant l'arbre d'entrée 18 de la boîte de vitesses 21. Ce tube 6, ici métallique, présente au niveau de son extrémité arrière un flasque annulaire 61 d'orientation transversale par l'intermédiaire duquel il s'appuie sur la boîte de vitesses 21 en étant ainsi adossé à celle-ci. Ce tube 6 présente un bourrelet annulaire de centrage 62 pratiqué dans son flasque 61 par pliage. Ce bourrelet 62, d'orientation axiale, pénètre dans l'ouverture 63 pratiquée dans la boîte de vitesses 21 pour passage de son arbre d'entrée. Le bourrelet 62 est en contact intime avec l'alésage interne de l'ouverture 63 en sorte qu'il est centré par ledit alésage et le carter de la boîte de vitesses 21. Un joint d'étanchéité 64 intervient à la périphérie interne du bourrelet 62 pour, de manière connue en soi, éviter une fuite d'huile de la boîte de vitesses, ledit joint 64 étant interposé radialement entre le bourrelet 62 et l'arbre d'entrée de la boîte de vitesses 21.

La périphérie externe du flasque 61 (la tranche externe de celui-ci) sert de centreur à un corps 5 constituant l'autre pièce de la partie fixe 5,6. Le corps 5 présente latéralement deux oreilles 51 trouées, globalement diamétralement opposées. C'est par l'intermédiaire de ces oreilles 51 que le corps 5 est fixé, ici à l'aide de vis, sur le carter de la boîte de vitesses 21. L'extrémité arrière du corps 5 est entaillée en ayant en section une forme d'équerre pour centrage du corps 5 sur la périphérie externe du flasque 61, ici métallique, et serrage du flasque 61 entre le corps 5 et le carter de la boîte de vitesses 21.

Le tube de support 6 s'étend en saillie axiale par rapport au corps 5. Ce corps 5, ici en matière moulable, entoure le tube 6, ici de faible épaisseur. Il est donc de forme tubulaire et s'étend axialement en saillie axiale par rapport au carter de la boîte de vitesses 21, tout comme le tube 6. Ainsi la chambre 50 a une forme annulaire cylindrique d'orientation axiale en étant délimitée à sa périphérie externe par le corps tubulaire 5, à sa périphérie interne par le tube 6, à l'une de ses extrémités axiales par le flasque 61, formant le fond de la chambre 50, et à l'autre de ses extrémités axiales par le piston mobile 4. Ainsi le tube 6 ferme la chambre 50, le corps 5 étant ici à base d'aluminium. Bien entendu un joint torique non référencé intervient entre le flasque 61 et la face arrière entaillée du corps 5 pour étanchéité de la chambre 50.

En service des souillures, telles que des impuretés, des saletés ou autres peuvent de déposer au niveau du tube 6.

Afin d'éviter que ces souillures ne pénètrent dans la chambre 50, c'est-à-dire dans la cavité borgne définie par le tube de support 6 et le corps extérieur 5, il est proposé selon l'invention de créer une chicane.

Ainsi suivant l'invention l'extrémité avant du tube 6 (son extrémité libre) porte en surépaisseur le manchon de guidage 9 précité.

Ce manchon 9 entoure donc l'extrémité avant du tube 6 en étant en contact intime par son alésage interne avec la périphérie externe du tube 6, qui sert ainsi de centreur.

Ce manchon 9 en en matériau à bas coefficient de frottement, ici en matière plastique à faible coefficient de frottement.

Il est rapporté à fixation axiale sur le tube 6 et offre par l'intermédiaire de sa périphérie externe une portée de guidage pour le piston 4, plus précisément à l'alésage interne à celui-ci.

L'extrémité arrière 44 du piston 4 présente un alésage interne de diamètre inférieur en sorte que le piston 4 est intérieurement étagé avec formation intérieurement d'un épaulement transversal 43 au niveau du changement de diamètre du piston 4.

Ainsi qu'on l'aura compris et qu'il ressort de la description et des dessins la longueur du manchon 9 est fonction des applications, l'extrémité axiale arrière 91 du manchon 9 servant de butée pour limiter le déplacement axial (ou course) du piston 4 dans des cas extrêmes et éviter que le diaphragme 13 vienne en contact avec le disque de friction 11.

Ce déplacement est limité par coopération de l'épaulement 43 du piston 4 avec ladite extrémité arrière 91 selon une caractéristique de l'invention.

En condition normale, le piston 4 ne vient donc pas en contact avec l'épaulement 91.

Le manchon 9 constitue une barrière obstruant l'accès des souillures au tube 6, à l'extrémité arrière 44 du piston 4 et à la chambre 50.

Ici le manchon 9 présente au niveau de son extrémité avant des crans de fixation 92 propre à s'engager dans des ouvertures complémentaires 65 pratiquées à l'extrémité avant du tube 6, qui sert de support au corps 5 et au manchon 9.

Au-delà du manchon 9 le tube 6 sert de guidage à l'extrémité arrière 44 du piston et à un joint 45 porté par ladite extrémité arrière 44.

Ce joint 45 présente deux lèvres pour coopération respectivement avec l'alésage interne du corps 5 et la périphérie externe du tube 6. Il présente centralement en saillie axiale un téton 47 propre à venir en butée contre le flasque 61 afin de diminuer les bruits.

Le joint 45 est rapporté sur l'extrémité arrière 44 du piston 4 à l'aide d'une pièce d'assemblage 46 de forme annulaire. Cette pièce 46 est métallique et a en section une forme d'équerre avec une partie transversale ancrée (ou noyée) dans le joint 45 et une partie axiale engagée sur la périphérie externe du piston 4 et pourvue de pattes inclinées obtenues par découpe et pliage. Ces pattes s'engagent dans une gorge pratiquée à la périphérie externe de l'extrémité arrière du piston 4.

Ainsi qu'on l'aura compris le montage du joint 45 équipé de sa pièce 46 se fait par encliquetage, les pattes de la pièce 46 se déployant pour ensuite venir en prise avec le flanc de la gorge du piston 4 le plus près de la face arrière du piston 4. Bien entendu le piston 4 présente extérieurement un changement de diamètre au niveau de son extrémité arrière 44 pour que la partie axiale de la pièce 46 ne fasse pas saillie par rapport à la périphérie externe du piston 4.

Le joint 45 ne peut sortir de la cavité borgne précitée grâce à l'extrémité arrière 91 du manchon servant de butée de manière précitée.

Le corps 5 est étagé en diamètre et présente une portion avant tubulaire 52 saillante axialement par rapport à une portion arrière 53 plus épaisse portant les oreilles 51. Il est ainsi formé extérieurement un épaulement transversal 54 au niveau des changements de diamètre du corps 5. La périphérie externe de la portion 52 sert de centreur aux moyens élastiques de précharge 7 précité. Ces moyens 7 consistent ici en un ressort à boudin prenant appui sur l'épaulement 54 et sur un épaulement transversal formé à la périphérie externe du flasque 41 du piston 4 sur la face dorsale dudit flasque. Cet épaulement appartient à une creusure annulaire 49 réalisée à la périphérie externe du flasque 41. Cette creusure 49 laisse apparaître une portée d'orientation axiale permettant un centrage de la dernière spire du ressort 7 d'orientation axiale. La bague interne 34 du roulement 3 s'étend radialement au-dessus du flasque 41 et est prolongée à sa périphérie externe par un rebord 35, dit rebord externe du roulement 3, dirigé radialement en direction opposée à l'axe de l'ensemble. Le rebord 35 est également décalé axialement en direction opposée aux billes du roulement 3, ici étanche de manière connue en soi grâce à sa cage et à un joint non référencé à la figure 1.

Grâce à cette disposition on peut monter l'extrémité avant 81 du soufflet 8, ici de forme tronconique, sur le rebord externe 35 par emboîtement, l'extrémité avant 81 présentant une gorge annulaire de réception du rebord 35. A son extrémité arrière de plus petit diamètre le soufflet 8 présente un bourrelet 82 propre à être pris en sandwich entre l'épaulement 54 et un rebord d'une pièce sinueuse 83. C'est par l'intermédiaire de cette pièce 83, ici métallique, que le ressort 7 prend appui sur l'épaulement 54. Autrement dit le ressort 7 permet de serrer la pièce 83 au contact de l'épaulement 54, ladite pièce 83 permettant, radialement au-delà du ressort 5, de serrer le bourrelet 82 de fixation du soufflet 8 au contact de l'épaulement 54.

On appréciera que le soufflet 8, en forme d'accordéon, entoure et protège le ressort 7, le piston 4 et la chambre 50 en empêchant l'introduction de souillures, saletés, impuretés ou autres. Ainsi suivant une caractéristique le soufflet 8 entoure le ressort 7, lequel entoure la portion tubulaire 52, le piston 4 et la chambre 50.

Ainsi la chambre 50 est bien protégée tant par le soufflet 8, que par le manchon de guidage 9.

Le ressort de précharge 7, le piston 4 avec son flasque 41, le manchon 9, le tube 6 et la portion tubulaire 52 sont implantés radialement en dessous de la partie principale de la bague interne 34 non tournante du roulement 3, ladite bague 34 étant globalement d'orientation axiale en étant dotée à sa périphérie interne du rebord 31 et à sa périphérie externe du rebord 35. Ainsi le piston 4, le ressort 7, la portion 52 sont logés en dessous de la partie principale de la bague 34 pour réduction de l'encombrement axial.

Ce ressort de précharge 7 s'appuie sur le flasque 41 selon une circonférence de diamètre supérieur à la circonférence selon laquelle s'appuie la rondelle d'autocentrage 32, qui est ainsi de taille réduite.

Ainsi le piston 4 présente à son extrémité avant un nez tubulaire 40 saillant axialement par rapport à son flasque 41 et permettant grâce à la gorge 42 le montage de la rondelle d'autocentrage 32, ainsi que de limiter le déplacement du rebord 31 et du roulement 3 ; un jeu radial prédéterminé existant entre l'alésage interne du rebord 31 et la périphérie externe du nez 40.

Les ressorts 32 et 7 exercent des efforts axiaux en sens opposé sur le flasque 41 ce qui est favorable à un bon coulissement du piston 4.

La partie principale de la bague interne 34 du roulement 3 est dirigée axialement vers le corps 5 et entoure également le flasque 41 en sorte que cela favorise une réduction de l'encombrement axial de la butée 2.

Grâce au rebord 31 on peut diminuer la hauteur du flasque 41 et former le nez 40.

L'alimentation de la chambre 50 se fait par l'arrière, la portion arrière 53 plus épaisse du corps 5 portant transversalement en saillie deux embouts 56,57 respectivement pour l'alimentation et la purge de la chambre 50.

Ces embouts 56,57 s'étendent transversalement parallèlement à la face avant du carter de la boîte de vitesses 21.

Les embouts 56,57 sont disposés de part et d'autre d'un trou de fixation (figure 1) pratiqué dans le carter de la boîte de vitesses 21.

Les canaux d'alimentation et de purge, ménagés dans les embouts 56,57, comportent une portion transversale prolongée par une portion inclinée débouchant au niveau du flasque 61 du tube 6 c'est-à-dire dans le fond de la chambre 50.

Cette disposition permet d'occuper au mieux l'espace disponible et de réduire l'encombrement axial de la butée 2, chaque embout 56,57 ayant donc une partie d'orientation transversale prolongée par une partie inclinée de raccordement à l'extrémité arrière 53 plus épaisse du corps 5. On notera que les doigts du diaphragme 13 ont une zone intermédiaire bombée ce qui permet également de réduire l'encombrement axial.

Ainsi à la figure 1 on voit dans la partie haute de la butée 2 en position d'extraction lorsque l'embrayage est désengagé et en partie basse la butée 2 en position rétractée lorsque l'embrayage est engagé.

Dans cette position rétractée la bague interne 33 entoure en partie la portion 52 du corps 5 et le soufflet 8, de forme tronconique, est comprimé sans interférence avec les embouts 56,57.

Dans les figures 1 et 3 on a représenté par C la course de débrayage.

Ainsi qu'on le sait la butée selon l'invention forme un récepteur du type concentrique asservi à un maître cylindre (non visible) piloté par la pédale de débrayage. Ici le fluide de commande est de l'huile.

En manoeuvrant la pédale de débrayage on déplace le piston du maître-cylindre ce qui permet, par une canalisation de liaison 58, représentée partiellement à la figure 1, de pressuriser la chambre 50 et de déplacer le piston 4 le long du manchon 9, le joint 45 se déplaçant le long du tube 6 et de la périphérie interne du corps 5. C'est le diaphragme 13 qui rappelle la butée 2 lorsqu'on dépressurise la chambre 50 pour engager l'embrayage.

Grâce au manchon 9 il est possible de prémonter la butée 2.

En effet on pose sur le support 6 le corps 5 ou vice versa, puis on enfile la pièce 83 avec mise en place du bourrelet 82 du soufflet 8, après on enfile le ressort 7, puis l'on monte le piston 4 en comprimant le ressort 7 et l'on enfile après le manchon 9 entre le piston 4 et le tube 6.

Ainsi on obtient un sous-ensemble grâce au ressort 7 maintenant le corps 5 en appui sur le flasque 61 et le piston 4 en appui sur l'extrémité arrière 91 du manchon 9. Enfin on monte le roulement 3 et la rondelle 32.

Bien entendu le flasque 61 peut présenter des pattes (ou tenons) rentrant dans des mortaises complémentaires du corps 5 avec verrouillage par sertissage.

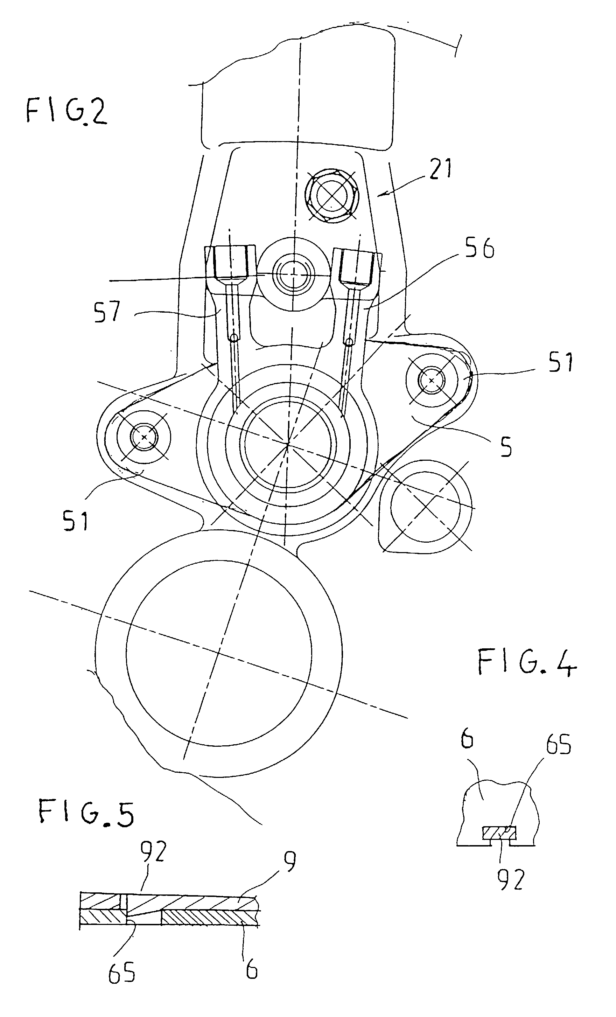

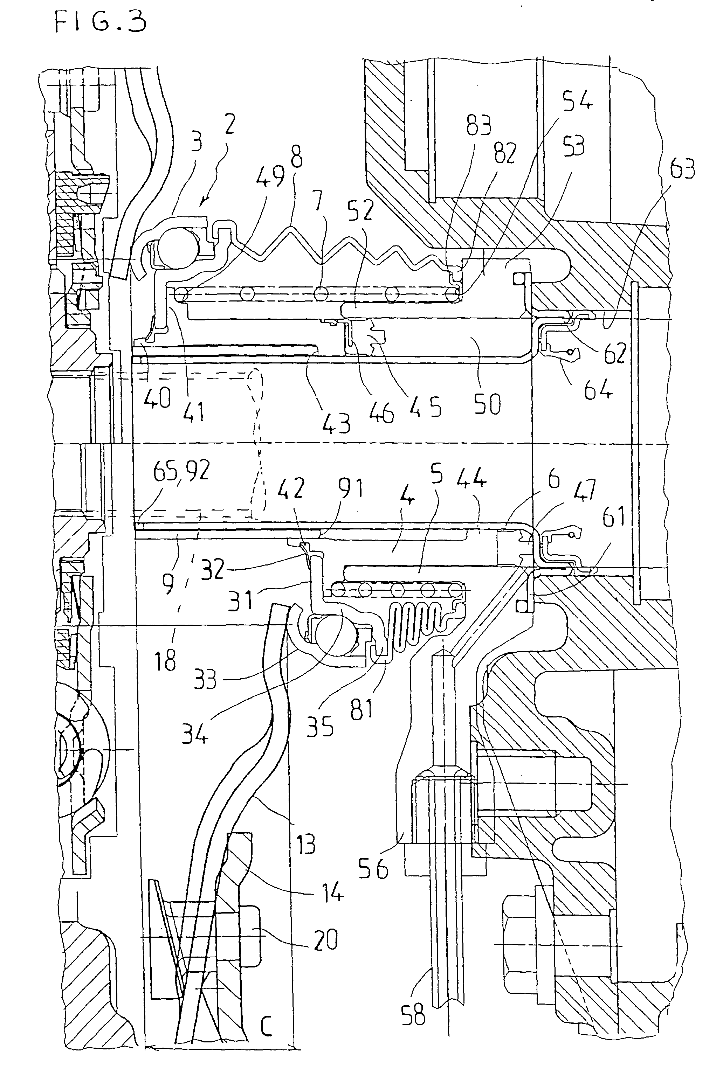

Ici l'extrémité avant du manchon 9 présente au moins un cran 91 et l'extrémité avant du tube 6 une échancrure ouverte complémentaire 65. On engage le cran 92, formant tenon, dans l'échancrure 65 formant mortaise, en ayant un contact entre le cran et le fond de l'échancrure 65, puis on effectue un verrouillage en réalisant latéralement un sertissage faisant fluer la matière des bords latéraux de l'échancrure 65 (figure 4) dont les bords ont en section une forme de U. Le manchon 9 est donc calé axialement et en rotation par sertissage et liaison de formes avec le tube 2.

En variante (figure 5) l'échancrure 65 peut être fermée et les crans 92 peuvent appartenir à des pattes longitudinales élastiquement déformables découpées du manchon. Le montage se fait par encliquetage conduisant à une fixation axiale et en rotation du manchon 9.

En variante l'échancrure est fermée et le cran 91 venu de moulage avec le manchon 9. Le montage se fait alors par engagement à force.

Dans tous les cas on obtient une fixation du manchon 9 avec le tube 6. De préférence on prévoit au moins deux crans 91 et deux échancrures 65 diamétralement opposées.

On appréciera que grâce à l'invention le corps 5 n'a pas besoin d'être usiné de manière précise, les portées de guidage du piston 4 étant formées par la périphérie externe du manchon 9 et par la périphérie externe du tube 6, le joint 45 étant guidé par le tube 6 et l'alésage interne du corps 5.

Plus précisément (figure 3) le manchon 9 s'étend en saillie axiale par rapport au corps 5, un intervalle globalement égal à la largeur de l'extrémité arrière 44 du piston 4 existant entre le manchon 9 (l'extrémité arrière 91 de celui-ci) et l'extrémité libre chanfreinée de la portion tubulaire 52 du corps 5, lorsque la butée est en position d'extraction embrayage désengagé. Ici l'intervalle précité est légèrement inférieur à la largeur de l'extrémité arrière 44 du piston 4, qui est ainsi très bien guidé.

Bien entendu la présente invention n'est pas limitée à l'exemple de réalisation décrit. En particulier la partie fixe 5,6 de la butée peut être monobloc.

Dans tous les cas le piston 4 de forme tubulaire est monté mobile (ou coulissant) axialement à l'intérieur d'une cavité annulaire borgne d'orientation axiale délimitée par un tube de support interne 6 et un corps extérieur 5 concentriques, ledit tube 6 faisant saillie axialement par rapport au corps 5 en étant traversé par un arbre mené en l'occurrence l'arbre d'entrée 18 de la boîte de vitesses, tandis que la cavité est propre à être alimentée par un fluide tel que de l'huile ou de l'air.

Cette cavité définie avec le piston 4 a une chambre de commande 50 à volume variable.

Bien entendu la butée n'est pas forcément autocentreuse, le roulement pouvant être emmanché sur le piston. En variante la bague intérieure ou extérieure pour être d'un seul tenant avec le piston comme décrit dans ledit document FRA-2 692 950.

On peut inverser la structure du roulement selon les applications. Ainsi la bague intérieure du roulement peut être tournante et la bague extérieure fixe en présentant les rebords 31 et 35 décrits ci-dessus.

On appréciera que la formation de la partie fixe en deux pièces est préférable car le tube intérieur 6 peut avoir une épaisseur moindre que lorsque la partie fixe est monobloc.

Ce tube est ainsi obtenu de manière économique. En outre avec une partie fixe en deux pièces, on peut aisément réaliser les canaux d'alimentation et de purge associés aux embouts 56 et 57 et ce par exemple par perçage vu l'implantation desdits canaux à l'arrière du corps extérieur 5 et leur inclinaison partielle.

Bien entendu la partie fixe peut être en trois parties à savoir un corps extérieur 5, un tube intérieur 6 et un fond. Dans ce cas le manchon de guidage peut être surmoulé sur le tube 6.

On peut faire un montage inverse. On enfile alors le piston sur le tube 6 équipé du manchon 9, puis on monte le ressort 7 et on met en place le corps 5 et le soufflet et enfin on monte le fond. En final on monte le roulement 3. Bien entendu dans tous les cas le piston 4 peut être équipé dès l'origine du roulement.

On appréciera que grâce au manchon 9, selon l'invention, on assure une protection du joint 45 et que l'on augmente la durée de vie de la butée de débrayage 2 ainsi que sa fiabilité.

On appréciera que l'extrémité arrière du corps 5 est entaillée pour serrage du flasque 61 du tube 6 entre le corps 5 et une partie fixe, ici la boîte de vitesses 21. En variante le flasque 61 peut présenter un bourrelet annulaire de centrage, qui s'étend axialement depuis son bord périphérique externe. Ce bourrelet coopère avec une ouverture pratiquée dans ladite boîte de vitesses. En-dessous du bourrelet, le flasque présente alors un décrochement axial qui sert de centreur au corps extérieur. Pour plus de précisions, on se reportera aux figures 6 et 7 de la demande FR 95 10750 du 14 septembre 1995.

## Revendications

1. Butée de débrayage à commande hydraulique pour embrayage (1) à diaphragme (13), notamment pour véhicule automobile, comportant une partie fixe (5,6) comprenant un tube de support interne (6) et un corps extérieur (5) concentriques définissant une cavité annulaire borgne (50) d'orientation axiale propre à être alimentée en fluide et à l'intérieur de laquelle est monté mobile axialement un piston (4) de forme tubulaire portant un élément d'attaque (3) propre à agir sur le diaphragme (13) de l'embrayage (1), dans lequel le tube de support (6) fait saillie axialement par rapport au corps extérieur (5), caractérisée en ce que l'extrémité avant du tube de support (6) porte en surépaisseur un manchon de guidage (9) pour le piston (4), en ce que l'extrémité arrière (91) du manchon de guidage (9) forme une butée propre à limiter la course axiale du piston (4) et en ce que le piston (4) est intérieurement étagé en sorte qu'il comporte intérieurement un épaulement (43) propre à coopérer avec l'extrémité arrière (91) du manchon de guidage (9).

2. Butée selon la revendication 1, caractérisée en ce que le manchon de guidage (9) est en matériau à bas coefficient de frottement, notamment en matière plastique à bas coefficient de frottement.

3. Butée selon la revendication 1 ou 2, caractérisée en ce que le manchon de guidage (9) est rapporté à fixation axiale sur le tube intérieur (6).

4. Butée selon la revendication 3, caractérisée en ce que le manchon de guidage (9) présente au moins un cran (92) propre à pénétrer de manière complémentaire dans une échancrure (65) du tube intérieur (6) pour sa fixation le tube intérieur (6).

5. Butée selon l'une quelconque des revendications 1 à 4, caractérisée en ce que l'extrémité arrière (44) du piston (4) porte un joint (45) par l'intermédiaire d'une pièce d'assemblage (46) ancrée dans ledit joint (45) et montée par encliquetage sur l'extrémité arrière (44) du piston (4).

6. Butée selon la revendication 5, caractérisée en ce que le joint (45) présente deux lèvres pour coopération respectivement avec l'alésage interne du corps extérieur (5) et la périphérie externe du tube intérieur (6).

7. Butée selon la revendication 5 ou 6, caractérisée en ce que le joint (45) présente centralement en saillie axiale un téton (47) propre à venir en butée contre le fond de la cavité afin de diminuer les bruits.

8. Butée selon l'une quelconque des revendications 5 à 7, caractérisée en ce que la pièce d'assemblage (46) est métallique et a en section une forme d'équerre avec une partie transversale ancrée dans le joint (45) et une partie axiale engagée sur la périphérie externe du piston (4) et pourvue de pattes inclinées obtenues par découpe et pliage, lesdites pattes étant propres à s'engager dans une gorge pratiquée à la périphérie externe de l'extrémité arrière (44) du piston (4).

9. Butée selon l'une quelconque des revendications 1 à 8, caractérisée en ce que le piston (4) présente transversalement à son extrémité avant un flasque annulaire transversal (41) dirigé radialement en direction opposée de l'axe de l'ensemble et en ce que l'élément d'attaque (3) consiste en un roulement à billes présentant une bague intérieure (34) fixe dotée d'un rebord annulaire transversal (31), dit rebord interne du roulement (3), dirigé vers l'axe de la butée de débrayage (2) et propre à s'appuyer sur le flasque (41) du piston (4).

10. Butée selon l'une quelconque des revendications 1 à 7, caractérisée en ce que la partie fixe (5,6) de la butée de débrayage (2) comprend un tube de support interne (6) distinct du corps extérieur (5).

11. Butée selon la revendication 10, caractérisée en ce que le corps extérieur (5) est étagé avec formation d'un épaulement transversal (54) et présente une portion tubulaire (52) servant au centrage d'un ressort de précharge (7) agissant entre l'épaulement (54) du corps extérieur (5) et un épaulement d'un flasque annulaire (41) appartenant au piston (4).

## Patentansprüche

1. Hydraulisch betätigtes Ausrücklager für eine Kupplung (1) mit Membranfeder (13), insbesondere für Kraftfahrzeuge, umfassend einen ortsfesten Teil (5, 6) mit einem inneren Tragrohr (6) und einem äußeren Körper (5) in konzentrischer Anordnung, die einen axial ausgerichteten ringförmigen Blindhohlraum (50) begrenzen, dem ein Arbeitsmedium zugeleitet werden kann und in dessen Innern axial beweglich ein rohrförmiger Kolben (4) gelagert ist, der ein Angriffselement (3) trägt, das auf die Membranfeder (13) der Kupplung (1) einwirken kann, wobei das Tragrohr (6) im Verhältnis zum Außenkörper (5) axial vorsteht, **dadurch gekennzeichnet,** daß das vordere Ende des Tragrohrs (6) überstehend eine Führungsmuffe (9) für den Kolben (4) trägt, daß das hintere Ende (91) der Führungsmuffe (9) einen Anschlag bildet, um den axialen Hub des Kolbens (4) zu begrenzen, und daß der Kolben (4) innen abgestuft ist, so daß er innen eine Schulter (43) umfaßt, die mit dem hinteren Ende (91) der Führungsmuffe (9) zusammenwirken kann.

2. Ausrücklager nach Anspruch 1, **dadurch gekennzeichnet**, daß die Führungsmuffe (9) aus einem Werkstoff mit niedrigem Reibungskoeffizienten, insbesondere aus Kunststoff mit niedrigem Reibungskoeffizienten, besteht.

3. Ausrücklager nach Anspruch 1 oder 2, **dadurch gekennzeichnet**, daß die Führungsmuffe (9) durch axiale Befestigung am Innenrohr (6) angebracht ist.

4. Ausrücklager nach Anspruch 3, **dadurch gekennzeichnet**, daß die Führungsmuffe (9) mindestens eine Raste (92) aufweist, die formschlüssig in eine Aussparung (65) des Innenrohrs (6) eingreifen kann, um sie am Innenrohr (6) zu befestigen.

5. Ausrücklager nach einem der Ansprüche 1 bis 4, **dadurch gekennzeichnet**, daß das hintere Ende (44) des Kolbens (4) eine Dichtung (45) über ein Verbindungsteil (46) trägt, das in der besagten Dichtung (45) verankert und durch Verrastung am hinteren Ende (44) des Kolbens (4) angebracht ist.

6. Ausrücklager nach Anspruch 5, **dadurch gekennzeichnet**, daß die Dichtung (45) zwei Lippen für das Zusammenwirken mit der Innenbohrung des Außenkörpers (5) bzw. mit dem äußeren Umfang des Innenrohrs (6) aufweist.

7. Ausrücklager nach Anspruch 5 oder 6, **dadurch gekennzeichnet**, daß die Dichtung (45) mittig einen axial vorstehenden Zapfen (47) aufweist, der am Boden des Hohlraums zum Anschlag kommen kann, um die Geräuschentwicklung zu verringern.

8. Ausrücklager nach einem der Ansprüche 5 bis 7, **dadurch gekennzeichnet**, daß das Verbindungsteil (46) aus Metall ausgeführt ist und im Querschnitt eine Winkelform mit einem in der Dichtung (45) verankerten Querteil und einem axialen Teil aufweist, der am äußeren Umfang des Kolbens (4) eingesetzt und mit geneigten änsätzen versehen ist, die durch Stanzen und Biegen ausgeführt sind, wobei die besagten Ansätze in eine Auskehlung eingreifen können, die am äußeren Umfang des hinteren Endes (44) des Kolbens (4) eingearbeitet ist.

9. Ausrücklager nach einem der Ansprüche 1 bis 8, **dadurch gekennzeichnet**, daß der Kol-ben (4) quer an seinem vorderen Ende einen Querflansch (41) aufweist, der radial in der zur Achse der Baueinheit entgegengesetzten Richtung verläuft, und daß das Angriffselement (3) aus einem Kugellager besteht, das einen festen Innenring (34) aufweist, der mit einer als innere Randleiste des Kugellagers (3) bezeichneten ringförmigen Querrandleiste (31) versehen ist, die zur Achse des Ausrücklagers (2) gerichtet ist und auf dem Flansch (41) des Kolbens (4) zur Auflage kommen kann.

10. Ausrücklager nach einem der Ansprüche 1 bis 7, **dadurch gekennzeichnet**, daß der ortsfeste Teil (5, 6) des Ausrücklagers (2) ein inneres Tragrohr (6) umfaßt, das vom Außenkörper (5) getrennt ist.

11. Ausrücklager nach Anspruch 10, **dadurch gekennzeichnet**, daß der Außenkörper (5) mit Bildung einer Querschulter (54) abgestuft ist und einen rohrförmigen Abschnitt (52) aufweist, der zur Zentrierung einer Vorspannfeder (7) dient, die zwischen der Schulter (54) des Außenkörpers (5) und einer Schulter eines ringförmigen Flansches (41) wirkt, der zum Kolben (4) gehört.

## Claims

1. An hydraulically controlled clutch release bearing for a clutch (1) with a diaphragm (13), especially for a motor vehicle, having a fixed part (5, 6) comprising an internal support tube (6) and an external body (5), concentric with each other and defining a blind annular cavity (50) orientated axially and adapted to be fed with fluid, inside which there is mounted, for axial movement, a tubular piston (4) carrying an actuating element (3) adapted to act on the diaphragm (13) of the clutch (1), wherein the support tube (6) projects axially with respect to the external body (5), characterised in that the front end of the support tube (6) carries, augmenting its thickness, a guide sleeve (9) for the piston (4), in that the rear end (91) of the guide sleeve (9) constitutes an abutment for limiting the axial travel of the piston (4), and in that the piston (4) is stepped internally so that it includes an internal shoulder (43) arranged to cooperate with the rear end (91) of the guide sleeve (9).

2. A release bearing according to Claim 1,
characterised in that the guide sleeve (9) is of a low friction material, in particular a low friction plastics material.

3. A release bearing according to Claim 1 or Claim 2, characterised in that the guide sleeve (9) is engaged and fastened axially on the internal tube (6).

4. A release bearing according to Claim 3,
characterised in that the guide sleeve (9) has at least one projecting nib (92) adapted to penetrate in a complementary manner into a slot (65) of the internal tube (6) for fastening it to the internal tube (6).

5. A release bearing according to any one of Claims 1 to 4, characterised in that the rear end (44) of the piston (4) carries a seal (45) through an assembly member (46) anchored in the said seal (45) and snap-fitted on the rear end (44) of the piston (4).

6. A release bearing according to Claim 5,
characterised in that the seal (45) has lips for cooperating with, respectively, the internal bore of the external body (5) and the outer periphery of the internal tube (6).

7. A release bearing according to Claim 5 or Claim 6, characterised in that the seal (45) has a central, axially projecting, spigot element (47) arranged to come into abutment against the base of the cavity so as to reduce noise.

8. A release bearing according to any one Claims 5 to 7, characterised in that the assembly member (46) is of metal and has an L-shaped cross section with a transverse portion anchored in the seal (45) and an axial portion engaged in the outer periphery of the piston (4), and provided with inclined lugs formed by stamping out and bending, the said lugs being adapted to engage in a groove formed in the outer periphery of the rear end (44) of the piston (4).

9. A release bearing according to any one of Claims 1 to 8, characterised in that the piston (4) has at its front end a transverse annular flange portion (41) which extends radially away from the axis of the assembly, and in that the actuating element (3) consists of a ball bearing having a fixed inner ring (34) which includes a transverse annular flange (31) called the inner flange of the bearing (3), which extends towards the axis of the clutch release bearing (2) and is adapted to bear on the flange portion (41) of the piston (4).

10. A release bearing according to any one of Claims 1 to 7, characterised in that the fixed part (5, 6) of the clutch release bearing (2) comprises an internal support tube (6) separate from the external body (5).

11. A release bearing according to Claim 10,
characterised in that the external body (5) is stepped, to define a transverse shoulder (54), and includes a tubular portion (52) for centring a preloading spring (7) which acts between the shoulder (54) of the external body (5) and a shoulder of an annular flange portion (41) of the piston (4).
